# EUROPÄISCHE PATENTSCHRIFT

(11) **EP 0 342 350 B1**
(45) Veröffentlichungstag und Bekanntmachung des Hinweises auf die Patenterteilung: **13.10.1993**
(21) Anmeldenummer: 89106247.3
(22) Anmeldetag: 08.04.1989
(51) Int. Cl.: B62D 1/18

(54) **Durch Handkraft höhenverstellbare Kraftfahrzeuglenksäule**
Automotive vehicle steering column, manually adjustable in height
Colonne de direction de véhicule automobile réglable manuellement en hauteur

(30) Priorität: 19.05.1988 DE 8806563 U
(43) Veröffentlichungstag der Anmeldung: 23.11.1989
(73) Patentinhaber: REICHE & CO., 32791 Lage (DE)
(72) Erfinder: Reiche, Carl-Heinz, D-4937 Lage, Lippe (DE); Arnold, Hans, D-4937 Lage, Lippe (DE)
(74) Vertreter: Loesenbeck, Karl-Otto, Dipl.-Ing.

(56) Entgegenhaltungen:
- DE-A- 3 202 669
- DE-U- 8 534 668
- GB-A- 1 191 989
- US-A- 3 399 549

## Beschreibung

Die vorliegende Erfindung betrifft eine durch Handkraft höhenverstellbare Kraftfahrzeuglenksäule, mit einem aus einem Innen- und einem Außenrohr bestehenden Teleskoprohr, bei dem am Innenrohr im Überlappungsbereich mit dem Außenrohr in Abstand voneinander angeordnete, aufgespritzte oder aufgegossene, mit ebenen Gleitflächen ausgerüstete Gleitbuchsen vorgesehen sind, denen Gleitflächen des im Verschiebebereich im Querschnitt mehreckigen Außenrohres zugeordnet sind, wobei die Gleitflächen der beiden Gleitbuchsen relativ zueinander eine geringe Drehwinkelversetzung aufweisen und durch Verdrehen eines zwischen ihnen liegenden Torsionselementes spielfrei an den Gleitflächen des Außenrohres gehalten sind.

Eine Kraftfahrzeuglenksäule der vorerwähnten Art ist aus dem Dokument DE-U-85 34 668 bekannt. In diesem Dokument, welches die Grundlage für den Oberbegriff des Patentanspruches 1 bildet, wird eine Kraftfahrzeuglenksäule offenbart, bei der zwischen den beiden auf dem Innenrohr aufgebrachten Gleitbuchsen eine Seite des Innenrohres mit einer Ausnehmung versehen und der Überlappungsbereich im Bereich einer Gleitbuchse gegenüber dem Überlappungsbereich im Bereich der anderen Gleitbuchse im Querschnitt gesehen verdreht ausgebildet ist. Dies bedeutet, daß zwischen den Gleitbuchsen ein tordierbarer Abschnitt des Innenrohres vorgesehen werden muß, durch den der nutzbare Verschiebebereich zwischen Außenrohr- und Innenrohr eingeschränkt wird.

Aus der US-A-33 99 549 ist eine Kraftfahrzeuglenksäule bekannt, bei der in ein Außenrohr, dessen Innenwandung mit in Achsrichtung verlaufenden Nuten versehen ist, ein mit entsprechend außenverzahnten Gleitbuchsen ausgestatteter Drehstab eingeschoben ist. Die Gleitbuchsen sind bezüglich ihrer Verzahnung winkelversetzt zueinander angeordnet und durch eine Verdrehung des Drehstabes werden die beiden Gleitbuchsen in eine Flucht miteinander gebracht und dadurch die beiden Gleitbuchsen spielfrei in den Nuten des Außenrohres gehalten. Die Gleitbuchsen erstrecken sich dabei über den geschwächten mittleren und tordierfähigen Abschnitt des Drehstabes hinaus, so daß sich bei dieser Konstruktion eine große zutzbare Verschiebelänge ergibt.

Diese Konstruktion ist aber bei einer Kraftfahrzeuglenksäule nach dem DE-U-85 34 668 nicht anwendbar, da dort die Gleitbuchsen im Überlappungsbereich des Innenrohres mit dem Außenrohr aufgespritzt oder aufgegossen sind.

Der vorliegenden Erfindung liegt die Aufgabe zugrunde, bei einer durch Handkraft höhenverstellbaren Kraftfahrzeuglenksäule der gattungsgemäßen Art den Verstellbereich zwischen dem Außen- und dem Innenrohr zu vergrößern.

Diese Aufgabe wird nach der Erfindung dadurch gelöst, daß als Torsionselement ein sich in das Innenrohr erstreckender Drehstab vorgesehen ist, dessen innerhalb des Innenrohres liegendes Endstück mit dem Innenrohr verbunden ist und mit dessen anderem, über das Stirnende hinausragenden Endstück eine der Gleitbuchsen verbunden ist, während die unmittelbar auf dem Innenrohr angeordnete Gleitbuchse sich etwa bis an das Stirnende des Innenrohres erstreckt und daß die Endstücke mit einem mehreckigen Querschnitt versehen sind.

Durch den im Innenraum des Innenrohres angeordneten Drehstab, der beim Zusammenbau des Teleskoprohres in seinem Elastizitätsbereich tordiert wird, ergibt sich für beide Gleitbuchsen eine geringe Baulänge und ein entsprechend großer Verstellbereich gegenüber dem Außenrohr. Dieser große Verstellbereich der Kraftfahrzeuglenksäule hat bei einem Aufprall des Kraftfahrzeuges erhebliche Vorteile, da durch entsprechende Sicherheitsmaßnahmen das Lenkrad von dem Fahrzeugführer unter voller Ausnutzung des weiten Verstellbereiches wegbewegt werden kann.

Weitere Merkmale der Erfindung ergeben sich aus den Unteransprüchen. Ein Ausführungsbeispiel der Erfindung ist in der Zeichnung dargestellt und wird im folgenden beschrieben.

Es zeigen:
- Fig. 1: eine durch Handkraft höhenverstellbare Kraftfahrzeuglenksäule, und zwar teilweise geschnitten,
- Fig. 2: einen Schnitt nach der Linie II-II in Fig. 1, und zwar in vergrößertem Maßstab und
- Fig. 3: einen Schnitt nach der Linie III-III in Fig. 1.

Die Kraftfahrzeuglenksäule 1 ist als Teleskoprohr ausgebildet, das sich aus einem Außenrohr 2 und einem Innenrohr 3 zusammensetzt. Am äußeren Ende 4 des Außenrohres wird ein Lenkrad befestigt, während am äußeren Ende 5 des Innenrohres ein Lenkgetriebe vorgesehen wird.

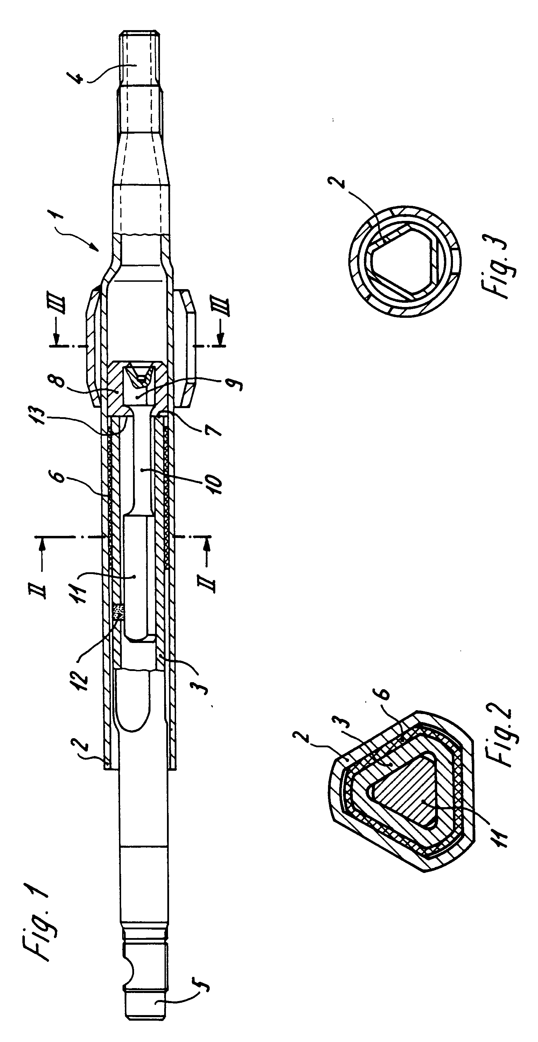

Aus den Fig. 2 und 3 ergibt sich, daß das Außenrohr 2 im Überlappungs- und Verschiebebereich zwischen dem Außen- und dem Innenrohr mehreckig, und zwar im dargestellten Ausführungsbeispiel dreieckförmig, ausgebildet ist. Eine dem Außenrohr entsprechende Querschnittskotur weist das Innenrohr 3 auf, auf dessen Oberfläche eine Gleitbuchse 6 gegossen oder gespritzt wurde. Aus der Fig. 1 ergibt sich, daß sich diese Gleitbuchse 6 bis in die Nähe des Stirnendes 7 des Innenrohres 3 erstreckt. In der Nähe des Stirnendes 7 des Innenrohres 3, und zwar außerhalb des Innenrohres, ist eine zweite Gleitbuchse 8 vorgesehen, die an einem Endstück 9 eines Drehstabes 10 festgelegt ist. Das andere Endstück 11 des Drehstabes ist entsprechend der Innenkontur des Innenrohres 3 ausgebildet und greift somit, wie dies aus der Fig. 2 zu entnehmen ist, formschlüssig in das Innenrohr ein. Eine zusätzliche Festlegung des Endstücks 11 gegen eine axiale Verschiebung innerhalb des Innenrohres erfolgt durch einen Schweißpunkt 12, der das Endstück 11 mit den Innenrohr 3 verbindet.

Die Gleitflächen der Gleitbuchse 6 weisen zu den zugeordneten Gleitflächen der Gleitbuchse 8 eine geringe Drehwinkelversetzung auf. Beim Einsetzen des Innenrohres in das Außenrohr wird eine Ausrichtung der Gleitflächen der genannten Gleitbuchsen zu den Gleitflächen des Außenrohres vorgenommen, wobei der Drehstab 10, der vorzugsweise im Querschnitt rund ausgebildet ist, in seinem Elastizitätsbereich tordiert wird. Hierdurch ergibt sich eine spielfreie Verbindung zwischen dem Außen- und dem Innenrohr in Drehrichtung.

Das Endstück 9, auf das die Gleitbuchse 8 gespritztoder gegossen wird, ist im Querschnitt mehreckig ausgebildet. Die Stirnfläche 13 der Gleitbuchse 8 liegt an der Stirnfläche 7 des Innenrohres 3 an.

## Patentansprüche

1. Durch Handkraft höhenverstellbare Kraftfahrzeuglenksäule (1), mit einem aus einem Innen- und einem Außenrohr (3, 2) bestehenden Teleskoprohr, bei dem am Innenrohr (3) im Überlappungsbereich mit dem Außenrohr in Abstand voneinander angeordnete, aufgespritzte oder aufgegossene, mit ebenen Gleitflächen ausgerüstete Gleitbuchsen (6, 8) vorgesehen sind, denen Gleitflächen des im Verschiebebereich im Querschnitt mehreckigen Außenrohres (2) zugeordnet sind, wobei die Gleitflächen der beiden Gleitbuchsen (6, 8) relativ zueinander eine geringe Drehwinkelversetzung aufweisen und durch Verdrehen eines zwischen ihnen liegenden Torsionselementes spielfrei an den Gleitflächen des Außenrohres (2) gehalten sind, **dadurch gekennzeichnet**, daß als Torsionselement ein sich in das Innenrohr (3) erstreckender Drehstab (10) vorgesehen ist, dessen innerhalb des Innenrohres (3) liegendes Endstück (11) mit dem Innenrohr (3) verbunden ist und mit dessem anderen, über das Stirnende (7) hinausragenden Endstück (9) eine der Gleitbuchsen (8) verbunden ist, während die unmittelbar auf dem Innenrohr angeordnete Gleitbuchse (6) sich etwa bis an das Stirnende (7) des Innenrohres (3) erstreckt und daß die Endstücke (9, 11) mit einem mehreckigen Querschnitt versehen sind.

2. Durch Handkraft höhenverstellbare Kraftfahrzeuglenksäule nach Anspruch 1, dadurch gekennzeichnet, daß die drehstabfeste Gleitbuchse (8) eine Stirnfläche (31) aufweist, die an der Stirnfläche (7) des Innenrohres (3) anliegt.

3. Durch Handkraft höhenverstellbare Kraftfahrzeuglenksäule nach Anspruch 1 oder 2, dadurch gekennzeichnet, daß der Drehstab (10) einen runden Querschnitt aufweist.

4. Durch Handkraft höhenverstellbare Kraftfahrzeuglenksäule nach einem der Ansprüche 1 bis 3, dadurch gekennzeichnet, daß das im Innenrohr (3) liegende Endstück (11) mit dem Innenrohr verschweißt ist.

5. Durch Handkraft höhenverstellbare Kraftfahrzeuglenksäule nach einem der Ansprüche 1 bis 4, dadurch gekennzeichnet, daß das der Drehstabfesten Gleitbuchse (8) abgewandte Endstück (11) formschlüssig in das Innenrohr (3) eingreift.

6. Durch Handkraft höhenverstellbare Kraftfahrzeuglenksäule nach einem der Ansprüche 1 bis 5, dadurch gekennzeichnet, daß der Drehstab (10) im Bereich der auf der Oberfläche des Innenrohres (3) festgelegten Gleitbuchse (6) liegt.

## Claims

1. A motor vehicle steering column (1) which is adjustable in height by manual force, having a telescopic tube comprising an inner tube and an outer tube (3, 2), wherein provided on the inner tube (3) in the region of overlap with the outer tube are sliding bushes (6, 8) which are arranged at a spacing from each other and which are cast or injection-moulded thereon and which are provided with flat sliding surfaces and with which there are associated sliding surfaces of the outer tube (2) which is of polygonal cross-section in the region of displacement, wherein the sliding surfaces of the two sliding bushes (6, 8) have a slight degree of rotational angular displacement relative to each other and are held play-free against the sliding surfaces of the outer tube (2) by twisting of a torsion element which is disposed between the sliding bushes, characterised in that the torsion element is a torsion bar (10) which extends into the inner tube (3) and whose end portion (11), disposed within the inner tube (3), is connected to the inner tube (3), one of the sliding bushes (8) being connected to the other end portion (9) of the torsion bar, which projects beyond the end (7), while the sliding bush (6) which is arranged directly on the inner tube extends approximately to the end (7) of the inner tube (3), and that the end portions (9, 11) are provided with a polygonal cross-section.

2. A motor vehicle steering column which is adjustable in height by manual force characterised in that the sliding bush (8) which is fixed with respect to the torsion bar has an end face (31) which bears against the end face (7) of the inner tube (3).

3. A motor vehicle steering column which is adjustable in height by manual force according to claim 1 or claim 2 characterised in that the torsion bar (10) is of a round cross-section.

4. A motor vehicle steering column which is adjustable in height by manual force according to one of claims 1 to 3 characterised in that the end portion (11) which is disposed in the inner tube (3) is welded to the inner tube.

5. A motor vehicle steering column which is adjustable in height by manual force according to one of claims 1 to 4 characterised in that the end portion (11) which is remote from the sliding bush (8) which is fixed to the torsion bar engages in positively locking relationship into the inner tube (3).

6. A motor vehicle steering column which is adjustable in height by manual force according to one of claims 1 to 5 characterised in that the torsion bar (10) is disposed in the region of the sliding bush (6) which is fixed on the surface of the inner tube (3).

## Revendications

1. Colonne de direction (1) de véhicule automobile réglable en hauteur manuellement, comportant un tube téléscopique composé d'un tube interne et d'un tube externe (3, 2), sur lequel sont prévues des douilles de glissement (6, 8) injectées ou moulées, à surfaces de glissement planes, disposées à distance les unes des autres sur le tube interne (3), dans la zone de recouvrement avec le tube externe, auxquelles sont associées des surfaces de glissement du tube externe (2) à section polygonale dans la zone de déplacement, les surfaces de glissement des deux douilles de glissement (6, 8) présentant, l'une par rapport à l'autre, un décalage de position angulaire limité et étant maintenues sans jeu sur les surfaces de glissement du tube externe (2) par torsion d'un élément de torsion situé entre elles, caractérisée en ce qu'une barre de torsion (10), s'étendant dans le tube interne (3), est prévue comme élément de torsion, dont la partie d'extrémité (11), située à l'intérieur du tube interne (3), est liée avec celui-ci (3), et dont l'autre partie d'extrémité (9), s'étendant au-delà de l'extrémité frontale (7), est liée à l'une des douilles de glissement (8), tandis que la douille de glissement (6) disposée directement sur le tube interne s'étend approximativement jusqu'à l'extrémité frontale (7) du tube interne (3), et en ce que les parties d'extrémité (9, 11) présentent une section transversale polygonale.

2. Colonne de direction de véhicule automobile réglable en hauteur manuellement selon la revendication 1, caractérisée en ce que la douille de glissement (8) solidaire de la barre de rotation présente une face frontale (13) qui repose contre la face frontale (7) du tube interne (3).

3. Colonne de direction de véhicule automobile réglable en hauteur manuellement selon la revendication 1 ou 2, caractérisée en ce que la barre de rotation (10) présente une section transversale ronde.

4. Colonne de direction de véhicule automobile réglable en hauteur manuellement selon l'une des revendications 1 à 3, caractérisée en ce que la partie d'extrémité (11) logée à l'intérieur du tube interne (3) est soudée avec celui-ci.

5. Colonne de direction de véhicule automobile réglable en hauteur manuellement selon l'une des revendications 1 à 4, caractérisée en ce que la partie d'extrémité (11) orientée à l'opposé de la douille de glissement (8) solidaire de la barre de torsion s'engage par complémentarité de formes dans le tube interne (3).

6. Colonne de direction de véhicule automobile réglable en hauteur manuellement selon l'une des revendications 1 à 5, caractérisée en ce que la barre de torsion (10) est située dans la zone de la douille de glissement (6) fixée sur la surface du tube interne (3).
